# EUROPEAN PATENT APPLICATION

(11) **EP 4 603 350 A1**
(43) Date of publication of application: **20.08.2025**
(21) Application number: 25153977.1
(22) Date of filing: 24.01.2025
(51) Int. Cl.: B60W 30/06, B62D 15/02

(54) **OPERATION ASSIST APPARATUS**

(30) Priority: 13.02.2024 JP 2024019253
(71) Applicant: TOYOTA JIDOSHA KABUSHIKI KAISHA, Toyota-shi Aichi 471-8571 (JP)
(72) Inventor: SHIMOMURA, Ichiya, TOYOTA-SHI, AICHI, 471-8571 (JP)
(74) Representative: Cabinet Beau de Loménie

(57) **Abstract**

An operation assist apparatus (10) is configured to execute an operation assist control, which includes a first mode and a second mode, for assisting an operation of a driver when a vehicle (VA) travels to a target space. Whether the operation assist control is executed in the first mode or the second mode is selected. The operation assist apparatus (10) acquires a target route to the target space when the operation assist control is executed. The operation assist apparatus (10) execute an automatic driving control for automatically controlling at least a steered angle of the vehicle (VA) such that the vehicle (VA) travels along the target route when the first mode is selected, and controls a travel state of the vehicle (VA) according to a manual operation of the driver without executing the automatic driving control and display the target route on a display of the vehicle (VA), when the second mode is selected.

## Description

### TECHNICAL FIELD

The present invention relates to an operation assist apparatus configured to execute an operation assist control for assisting a driver's operation for traveling the vehicle to a target space.

Conventionally, there has been known an operation assist apparatus configured to execute an automatic parking control as an operation assist control. For example, the operation assist apparatus described in Patent Document 1 (hereinafter referred to as a "conventional apparatus") executes the automatic parking control. More specifically, in the automatic parking control, the conventional apparatus obtains a target route from the current position of a vehicle to a target space, and controls a travel state of the vehicle such that the vehicle automatically travels along the target route.

Patent Document 1: Japanese Patent Application Laid-Open No. 2021-062679

### SUMMARY

The conventional apparatus automatically parks the vehicle in the target space, so the driver does not need to perform any operations for parking the vehicle. For this reason, the conventional apparatus is unlikely to improve a parking skill of the driver to park the vehicle.

The present invention is made to address the above problem. That is, one of objects of the present invention is to provide the operation assist apparatus that can improve the driver's operation skill for traveling the vehicle to the target space.

An operation assist apparatus (hereinafter, referred to as "the present invention apparatus") according to the present invention executes an operation assist control for assisting an operation of a driver when a vehicle travels to a target space. The operation assist control includes a first mode and a second mode. Whether the operation assist control is executed in the first mode or the second mode is selected.

The operation assist apparatus is configured to:
acquire a target route to the target space when the operation assist control is executed;
execute an automatic driving control for automatically controlling at least a steered angle of the vehicle such that the vehicle travels along the target route when the first mode is selected; and
control a travel state of the vehicle according to a manual operation of the driver without executing the automatic driving control and display the target route on a display of the vehicle, when the second mode is selected.

According to the present invention apparatus, the automatic driving control is not executed when the second mode is selected. Therefore, the driver needs to perform the manual operation. In this case, the target route is displayed on the display, so the driver performs the manual operation such that the vehicle travels along the target route. Accordingly, the operation assist can improve the driver's operation skill.

In one aspect of the present invention apparatus, the operation assist apparatus is configured to be able to execute a guidance control for outputting at least one of an operation guidance relating to the manual operation that the driver should perform and a confirmation guidance relating to an area to which the driver should pay attention, when the operation assist control is executed.

According to the aspect, the driver can perform the manual operation for moving the vehicle to the target space based on the operation guidance. The driver can pay attention to the area which the driver should pay attention until the vehicle arrives at the target space based on the confirmation guidance. Accordingly, the operation assist can improve the driver's operation skill.

In one aspect of the present invention apparatus,
the operation assist apparatus is configured to a steering assist control for notifying the driver that an excessive condition is satisfied when the excessive condition is satisfied.

The excessive condition is satisfied when a steering wheel of the vehicle is operated such that a steering angle of the steering wheel is greater than a target steering angle for the vehicle to travel along the target route and a magnitude of a difference between the steering angle and the target steering angle is equal to or greater than a predetermined threshold.

According to the aspect, when the excessive condition is satisfied, the driver can know that the driver turns the steering wheel too much. Accordingly, the operation assist apparatus can increase a probability that the driver operates the steering wheel in the appropriate position.

In one aspect of the present invention apparatus,
the operation assist apparatus is configured to inhibit the steering wheel from being operated in a direction where the steering angle exceeds the target steering angle, when the excessive condition is satisfied.

According to the aspect, the operation of the steering wheel in the direction that exceeds the target steering angle is inhibited (interfered), so the driver can quickly know the driver turns the steering wheel too much.

In one aspect of the present invention,
the second mode includes a third mode and a fourth mode, and
the operation assist apparatus is configured to provide weaker assist to the driver when the fourth mode is selected than when the third mode is selected.

The driver can select between the third mode, which provides strong assist, and the fourth mode, which provides weak assist, based on the driver's operation skill.

In the above aspect,
the fourth mode can be selected when a predetermined release condition is satisfied, and
the operation assist apparatus is configured to:
   acquire a route deviation amount representing an amount of deviation from the target route and a completion deviation amount representing an amount of deviation from the target space when parking is complete in the target space, when the third mode is selected;
   determine whether or not a pass condition is satisfied each time at which parking is complete in the target space in the third mode,
   wherein, the pass condition is satisfied when the route deviation amount is equal to or smaller than a predetermined first threshold amount and the completion deviation amount is equal to smaller than a predetermined second threshold amount; and
   determine that the release condition is satisfied when the number of times that the pass condition is satisfied is equal to or greater than a predetermined threshold.

According to the aspect, the fourth mode, which provides the weak assist, can only be selected when it is determined that the driver's operation skill improves in the third mode, which provides the strong assist. This provides an incentive for the driver to select the second mode.

In the above aspect,
the operation assist apparatus is configured to:
be able to execute a guidance control and a steering assist control for when the second mode is selected,
wherein, the guidance control is a control for outputting at least one of an operation guidance relating to the manual operation that the driver should perform and a confirmation guidance relating to an area to which the driver should pay attention,
wherein, the steering assist control for notifying the driver that an excessive condition is satisfied when the excessive condition is satisfied,
wherein, the excessive condition is satisfied when a steering wheel of the vehicle is operated such that a steering angle of the steering wheel is greater than a target steering angle for the vehicle to travel along the target route and a magnitude of a difference between the steering angle and the target steering angle is equal to or greater than a predetermined threshold;
execute at least one of the guidance control and the steering assist control when the third mode is selected; and
execute neither the guidance control nor the steering assist control when the fourth mode is selected.

According to the aspect, at least one of the guidance control and the steering assist control is executed in the third mode, and neither of the guidance control and the steering assist control is executed in the fourth mode. As a result, the fourth mode provides weaker assist than the third mode.

In one aspect of the present invention apparatus,
the operation assist apparatus is configured to:
evaluate the manual operation until the vehicle arrives at the target space when parking is complete in the target space in the second mode; and
output a result of evaluating .

According to the aspect, the driver can know the objective evaluation results of the manual operation until the vehicle arrives at the target space.

### BRIEF DESCRIPTION OF THE DRAWINGS

FIG. 1 is a schematic system configuration diagram of an operation assist apparatus according to an embodiment of the present invention.
FIG. 2 is a diagram for explaining an assist screen displayed on a display shown in FIG. 1.
FIG. 3 is a flowchart illustrating a start determination routine executed by a CPU of an ECU shown in FIG. 1.
FIG. 4 is a flowchart illustrating an assist screen display routine executed by the CPU of the ECU shown in FIG. 1.
FIG. 5 is a flowchart illustrating an automatic parking control routine executed by the CPU of the ECU shown in FIG. 1.
FIG. 6 is a diagram for explaining a guidance control according to a first modification example of the embodiment of the present invention.
FIG. 7 is a diagram for explaining a confirmation message and a guidance message according to the first modification example of the embodiment of the present invention.
FIG. 8 is a flowchart illustrating a part of an automatic parking control routine according to a second modification example of the embodiment of the present invention.
FIG. 9 is a table summarizing a relationship between learning modes according to a third modification example of the embodiment of the present invention and controls performed in each of the learning modes.
FIG. 10 is a flowchart illustrating an automatic parking control routine according to a fourth modification example of the embodiment of the present invention.
FIG. 11 is a flowchart illustrating an automatic parking control routine according to a fifth modification example of the embodiment of the present invention.

### DETAILED DESCRIPTION

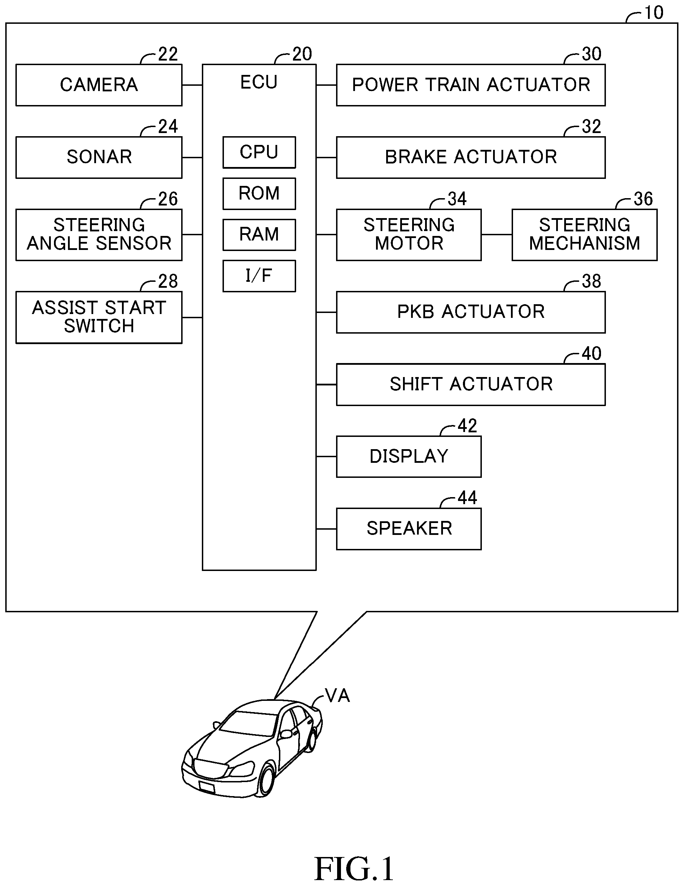

As shown in FIG. 1, an operation assist apparatus 10 is applied to a vehicle VA. The operation assist apparatus 10 comprises components shown in FIG. 1. In this specification, the "ECU 20" is an electronic control unit with a microcomputer as a main part. The ECU 20 is also referred to as a control unit, a controller and a computer. The microcomputer includes a CPU (processor), a ROM, a RAM, and an interface (I/F), etc. Functions realized by the ECU 20 may be realized by multiple ECUs.

A camera 22 acquires image data by capturing a scenery around the vehicle VA. The ECU 20 acquires the image data from the camera 22. A sonar 24 acquires sonar data on a position of object around the vehicle VA relative to vehicle VA. The ECU 20 acquires the sonar data from the sonar 24.

A steering angle sensor 26 measures a steering angle θ of a steering wheel (not shown) of the vehicle VA. When the steering wheel is in a neutral position, the steering angle θ is "0 deg". When the steering wheel is rotated clockwise (to the right) from the neutral position, the steering angle θ becomes a positive value, and when the steering wheel is rotated counterclockwise (to the left) from the neutral position, the steering angle θ becomes a negative value.

An assist start switch 28 is arranged in a position (for example, near the steering wheel) where the driver can operate the assist start switch 28 while sitting in a driver's seat in a cabin of the vehicle VA. The driver operates the assist start switch 28 when the driver wants to start the parking assist control.

A power train actuator 30 changes a driving force generated by a driving device (e.g., an internal combustion engine and/or an electric motor) of the vehicle VA. A brake actuator 32 controls a braking force applied to the vehicle VA. A steering motor 34 is incorporated in a steering mechanism 36. The steering mechanism 36 is a mechanism for changing a steered angle of steered wheels of the vehicle VA in accordance with the steering angle θ. The steering motor 34 generates an automatic steering torque to change the steered angle in response to an instruction from the ECU 20.

A PKB actuator 38 applies a parking brake force to wheels. The ECU 20 can maintain the vehicle VA in a stopped state by applying a parking brake force to the wheels using the PKB actuator 38. A shift actuator 40 changes a shift range. The shift range includes a parking range (P), a forward range (D), and a reverse range (R).

A display 42 is arranged in a position where the driver can see the display 22 while sitting in the driver's seat in the cabin of the vehicle VA. For example, the display 42 is a touch panel display. Therefore, the driver can input data by touching the display 42. A speaker 44 is installed in the cabin of the vehicle VA and outputs a voice message, etc.

### (Outline of operation)

The operation assist apparatus 10 executes the parking assist control for assisting a driver's operation for parking the vehicle VA in a target space, as an operation assist control for assisting the driver's operation for traveling the vehicle VA to the target space. The parking assist control is executed in either an automatic mode (a first mode) or a learning mode (a second mode). The driver can select which mode to execute the parking assist control in.

When the parking assist control is executed, the operation assist apparatus 10 acquires a target route to the target space. When the parking assist control is executed in the automatic mode, the operation assist apparatus 10 executes an automatic parking control, which is a type of an automatic driving control. In the automatic parking control, the operation assist apparatus 10 automatically controls at least the steering angle θ such that the vehicle VA can travel along the target route.

When the parking assist control is executed in the learning mode, the operation assist apparatus 10 controls a travel state of the vehicle VA according to a driver's manual operation without executing the automatic parking control. In other words, the operation assist apparatus 10 causes the vehicle VA to travel according to the driver's manual operation. In this case, the operation assist apparatus 10 displays the target route on the display 42.

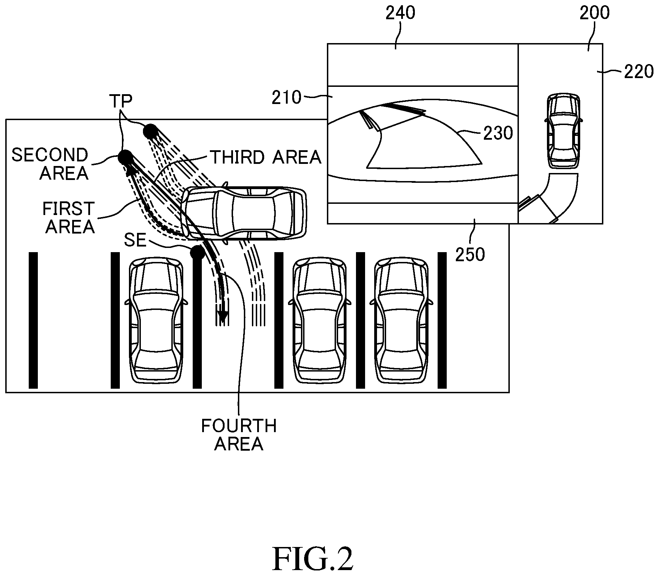

When the parking assist control is executed in the learning mode, the operation assist apparatus 10 displays an assist screen 200 shown in FIG. 2 on the display 42. The assist screen 200 displays a travel direction image 210 and an overhead image 220. The travel direction image 210 is an image of the scenery in a travel direction of the vehicle VA, and the overhead image 220 is an image of the scenery seen from directly above the vehicle VA.

Furthermore, in the assist screen 200, an assist line 230 is displayed on the forward image 210 and the overhead image 220. The assist line 230 is a line that a left edge and a right edge of a vehicle body of the vehicle VA trace when the vehicle VA travels along the target route. The driver can make the vehicle VA travel along the target route by operating the steering wheel of the vehicle VA such that the left edge and the right edge of the vehicle body of the vehicle trace the assist line 230. Therefore, in the learning mode, the driver performs the manual operation while watching the assist line 230, so the operation assist apparatus 10 can improve a parking skill of the driver.

### (Specific operation)

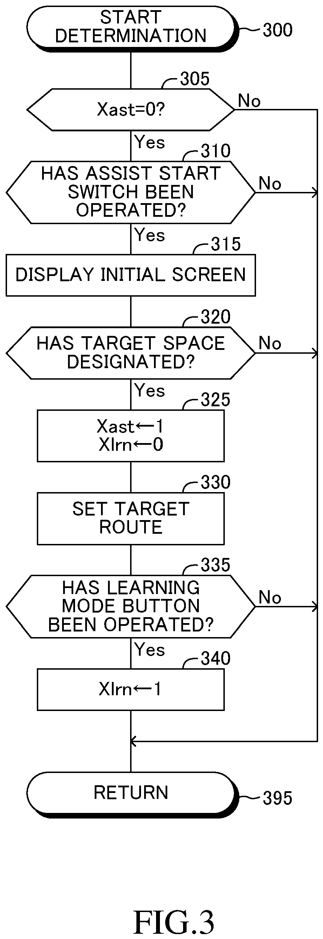

The CPU of the ECU 20 executes routines shown by flowcharts in FIGs. 3 to 5 every time a predetermined time elapses.

### <Start determination routine>

When an appropriate time point comes, the CPU starts a process from step 300 in FIG. 3. At step 305, the CPU determines whether or not an assist flag Xast is "0".

The assist flag Xast is set to "1" when the parking assist control starts, and is set to "0" when the parking assist control ends. The assist flag Xast is set to "0" in an initialization routine. The initialization routine is executed by the CPU when an ignition key switch (not shown) of the vehicle VA is changed from an off position to an on position.

When the assist flag Xast is "0", the CPU makes a "Yes" determination at step 305 and the process proceeds to step 310. At step 310, the CPU determines whether or not the assist start switch 28 has been operated.

When the assist start switch 28 has not been operated, the CPU makes a "No" determination at step 310 and the process proceeds to step 395. At step 395, the CPU terminates the present routine tentatively.

When the assist start switch 28 has been operated, the CPU makes a "Yes" determination at step 310 and executes steps 315 and 320.

Step 315: The CPU displays an initial screen on the display 42. On the initial screen, the forward image 210 and the overhead image 220 are displayed in the same manner as on the assist screen 200. In the forward image 210 and the overhead image 220, a space where the vehicle VA can be parked is surrounded by a frame, and the driver can designate the target space by touching the frame. Furthermore, in the initial screen, a learning mode button (not shown) is displayed.

Step 320: The CPU determines whether or not the target space has been designated in the initial screen.

When the target space has not been designated, the CPU makes a "No" determination at step 320 and the process proceeds to Step 395. At Step 395, the CPU terminates the present routine tentatively.

When the target space has been specified, the CPU makes a "Yes" determination at step 320 and executes steps 325 to 335.

Step 325: The CPU sets the assist flag Xast to "1" and sets a learning flag Xlrn to "0".

The learning flag Xlrn is set to "1" when the parking assist control is executed in the learning mode, and is set to "0" when the parking assist control is executed in the automatic mode. The learning flag Xlrn is set to "0" in the initialization routine.

Step 330: The CPU recognizes an object around the vehicle VA based on the image data and the sonar data, and sets the target route from the current position of the vehicle VA to the target space such that the vehicle avoids the object.

Step 335: The CPU determines whether or not the learning mode button displayed on the initial screen has been operated within a predetermined time after the target space is designated.

When the learning mode button has not been operated, the CPU makes a "No" determination at step 335 and the process proceeds to step 395. At Step 395, the CPU terminates the present routine tentatively.

When the learning mode button has been operated, the CPU makes a "Yes" determination at step 335 and the process proceeds to step 340. At Step 340, the CPU sets the learning flag Xlrn to "1". Thereafter, the process proceeds to step 395 and the CPU terminates the present routine tentatively.

In a case where the assist flag Xast is "1" when the process proceeds to step 305, the CPU makes a "No" determination at step 305 and the process proceeds to step 395. At step 395, the CPU terminates the present routine tentatively.

### <Assist screen display routine>

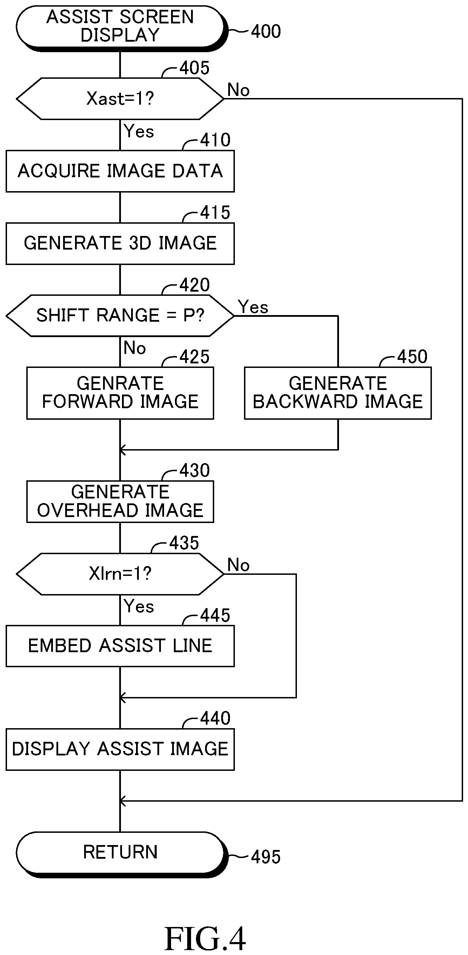

When an appropriate time point comes, the CPU starts a process from step 400 in FIG. 4. At step 405, the CPU determines whether or not the assist flag Xast is "1".

When the assist flag Xast is "0", the CPU makes a "No" determination at step 405, and the process proceeds to step 495. At step 495, the CPU terminates the present routine tentatively.

When the assist flag Xast is "1", the CPU makes a "Yes" determination at step 405 and executes steps 410 to 420.

Step 410: The CPU acquires the image data from the camera 22.

Step 415: The CPU generates a 3D image based on the image data.

Step 420: The CPU determines whether or not the shift range is the parking range (P).

When the shift range is not the parking range (R), the CPU makes a "No" determination at step 420 and executes steps 425 to 435.

Step 425: The CPU generates, based on the 3D image, a forward image of a forward direction of the vehicle VA as the travel direction image 210.

Step 430: The CPU generates the overhead image 220 based on the 3D image.

Step 435: The CPU determines whether or not the learning flag Xlrn is "1".

When the learning flag Xlrn is "0", the CPU makes a "No" determination at step 435 and the process proceeds to step 440. At step 440, the CPU displays the assist screen 200 including the travel direction image 210 and the overhead image 220, on the display 42. Thereafter, the process proceeds to step 495 and the CPU terminates the present routine tentatively.

In a case where the learning flag Xlrn is "1" when the process proceeds to step 435, the CPU makes a "Yes" determination at step 435 and the process proceeds to step 445. At step 445, the CPU embeds the assist line 230 in the travel direction image 210 and the overhead image 220. Thereafter, at step 440, the CPU displays the assist screen 200 including the travel direction image 210 and the overhead image 220 in which the assist lines 230 is embedded, on the display 42. Thereafter, the process proceeds to step 495, and the CPU terminates the present routine tentatively.

In a case where the shift range is the parking range (R) when the process proceeds to step 420, the CPU makes a "Yes" determination at step 420, and the process proceeds to step 450. At step 450, the CPU generates, based on the 3D image, a backward image of a backward direction of the vehicle VA as the travel direction image 210. Thereafter, the process proceeds to step 430.

In the present routine, when the learning flag Xlrn is "1", the assist line 230 is displayed on the travel direction image 210 and the overhead image 220 of the assist screen 200. The driver manually operates the vehicle VA so that the vehicle VA travels along the assist line 230. The operation assist apparatus 10 can improve the driver's parking skill.

### <Automatic parking control routine>

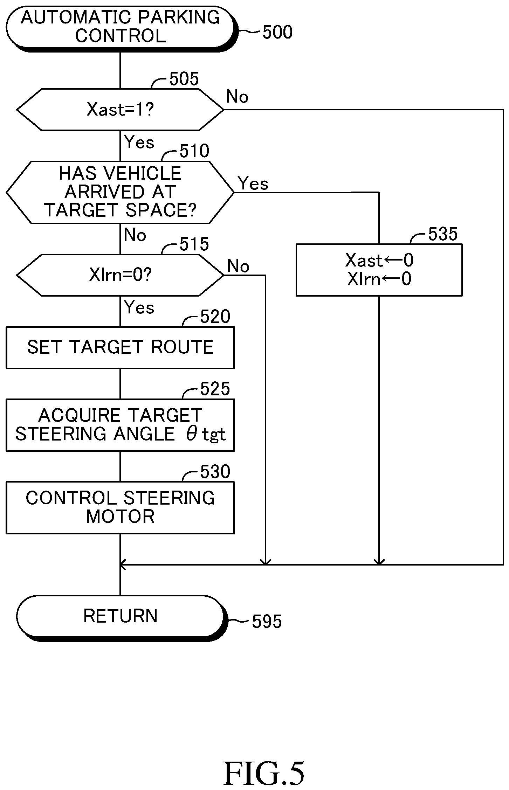

When an appropriate time point comes, the CPU starts a process from step 500 shown in FIG. 5, and at step 505, the CPU determines whether or not the assist flag Xast is "1".

If the assist flag Xast is "0", the CPU makes a "No" determination at step 505, and the process proceeds to step 595. At step 595, the CPU terminates the present routine tentatively.

When the assist flag Xast is "1", the CPU makes a "Yes" determination at step 505 and the process proceeds to step 510. At step 510, the CPU determines whether or not the vehicle VA has arrived at the target space. For example, the CPU stores an image of an area near the target space that was acquired when the target space was specified, and then determines whether or not the vehicle VA has arrived at the target space by comparing the stored image with the image data acquired at the current time.

When the vehicle VA has not arrived at the target space, the CPU makes a "No" determination at step 510 and the process proceeds to step 515. At Step 515, the CPU determines whether or not the learning flag Xlrn is "0".

When the learning flag Xlrn is "0", the CPU makes a "Yes" determination at step 515 and executes steps 520 to 530.

Step 520: The CPU again sets the target route from the current position of the vehicle VA to the target space.

Step 525: The CPU acquires the target steering angle θtgt for the vehicle VA to travel along the target route based on a deviation amount from the target route, the current direction of the vehicle VA, and the current steering angle θ.

Step 530: The CPU controls the steering motor 34 such that the steering angle θ matches the target steering angle θtgt.

Thereafter, the process proceeds to step 595, and the CPU terminates the present routine tentatively.

Steps 525 and 530 are a control for controlling the steered angle control to make the vehicle VA travel along the target route, and may be referred to as the "automatic parking control".

In a case where the vehicle VA has arrived at the target space when the process proceeds to step 510, the CPU makes a "Yes" determination at step 510 and the process proceeds to step 535. At step 535, the CPU sets the assist flag Xast and the learning flag Xlrn to "0". As a result, the parking assist control ends.

When the vehicle VA has arrived at the target space, the CPU may activate the PKB actuator 38 to maintain the vehicle VA in the stopped state, and may also control the shift actuator 40 to change the shift range to the parking range (P).

Even if the learning flag Xlrn is "1" ("No" at step 515), the CPU may again set the target route.

According to the present embodiment, when the learning flag Xlrn is "1", the automatic parking control is not executed, so the driver needs to park the vehicle VA manually. In this case, the assist line 230 is displayed on the travel direction image 210 and the overhead image 220 of the assist screen 200. The driver manually operates the vehicle VA such that the vehicle VA travels along the assist line 230. Therefore, the present embodiment can improve the driver's parking skill.

### (First modification example)

In the present modification example, when the ECU 20 executes the parking assist control in the learning mode, the ECU 20 also executes a guidance control. In the guidance control, the ECU 20 displays, on the assist screen 200, a confirmation message relating to an area to which the driver should pay attention according to a travel situation of the vehicle VA, and an operation message relating to the manual operation that the driver should perform according to the travel situation of the vehicle VA.

For example, the ECU20 divides the parking route shown in FIG. 2 into the following four areas, and displays the confirmation message and the operation message according to the area where the vehicle VA is located.

First area: An area from a point at which the parking assist control starts to a change point TP

The transition point TP is a point at which the vehicle VA reverses the travel direction (in other words, a point at which the travel direction of the vehicle VA changes from forward to backward.).

Second area: The change point TP

Third area: An area from the change point TP to a point at which a rear wheel of vehicle VA passes a space edge SE

The space edge SE is a left front edge of the target space when the driver steers the steering wheel to the left and the vehicle VA travels backward. The space edge SE is the right front edge of the target space when the driver steers the steering wheel to the right and the vehicle VA travels backward. In an example shown in FIG. 2, the space edge SE is the left front edge of the target space.

Fourth area: An area from a point at which the rear wheel passes the space edge SE to a point at which parking is complete.

When the ECU 20 executes the parking assist control in the learning mode, the ECU 20 specifies which area a reference point is located in. The reference point is the midpoint between a left rear wheel and a right rear wheel of the vehicle VA.

### <First area>

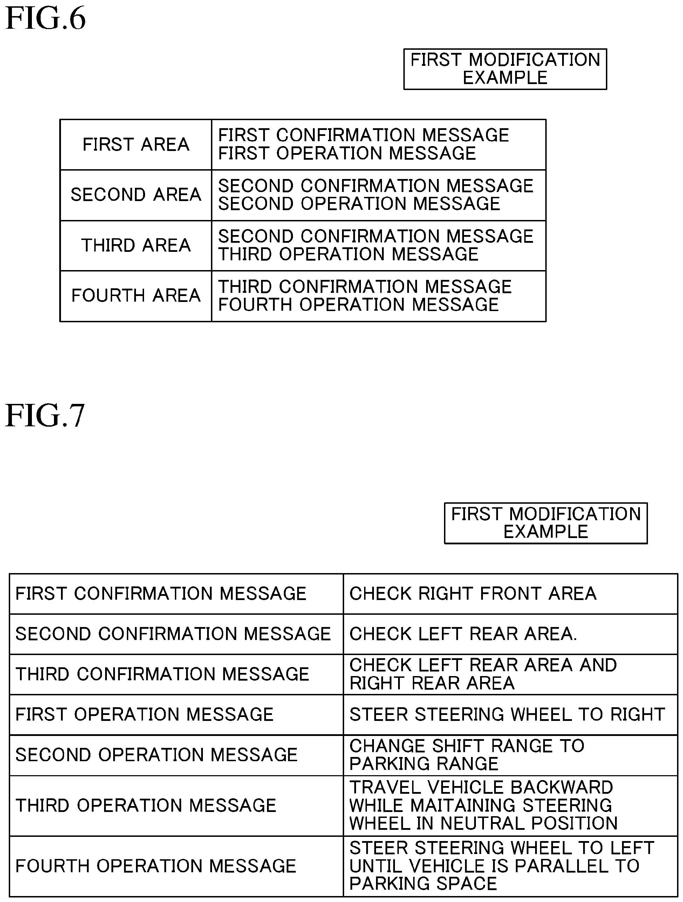

As shown in FIG. 6, when the vehicle VA is located in the first area, the ECU 20 displays a first confirmation message and a first operation message in a confirmation message display area 240 and an operation message display area 250, respectively.

As shown in FIG. 7, the first confirmation message is a message to check a right front area. The first operation message is a message to steer the steering wheel to the right.

### <Second area>

As shown in FIG. 6, when the vehicle VA is located in the second area, the ECU 20 displays a second confirmation message and a second operation message in the confirmation message display area 240 and the operation message display area 250, respectively.

As shown in FIG. 7, the second confirmation message is a message to check a left rear area. The second operation message is a message to change the shift range to the parking range.

### <Third area>

As shown in FIG. 6, when the vehicle VA is located in the third area, the ECU 20 displays the second confirmation message and a third operation message in the confirmation message display area 240 and the operation message display area 250, respectively.

As shown in FIG. 7, the third operation message is a message to travel the vehicle VA backward while maintaining the steering wheel in the neutral position.

### <Fourth area>

As shown in FIG. 6, when the vehicle VA is located in the fourth area, the ECU 20 displays a third confirmation message and a fourth operation message in the confirmation message display area 240 and the operation message display area 250, respectively.

As shown in FIG. 7, the third confirmation message is a message to check a left rear area and a right rear area. The fourth operation message is a message to steer the steering wheel to the left until the vehicle VA is parallel to the parking space.

In the present modification example, the confirmation message and the operation message are displayed on the display 42, but the confirmation message and the operation message may also be output as audio messages from the speaker 44. The control that outputs the confirmation message and the operation message is called a "guidance control". In the guidance control, at least one of the confirmation message and the operation message may be output.

As explained above, when the parking assist control is executed in the learning mode, the operation message (an operation guidance) and the confirmation message (a confirmation guidance) are output according to the area in which the vehicle VA is traveling. The driver performs "an operation for parking" specified by the operation message while looking at "an area to which the driver should pay attention" specified by the confirmation message. According to the present modification example, the driver can understand the operation that should be performed according to the travel condition of the vehicle VA and the area to which the driver should pay attention according to the travel condition of the vehicle VA, so the driver's parking skill can be improved.

### (Second modification example)

In the present modification example, when an excessive condition is satisfied, the ECU 20 executes a steering assist control that notifies the driver that the excessive condition is established. The excessive condition is satisfied when the steering wheel is operated such that the steering angle θ is greater than the target steering angle θtgt (in other words, the steering wheel is operated beyond the target steering angle θtgt), and a magnitude of a difference (Δθ) between the steering angle θ and the target steering angle θtgt is equal to or greater than a threshold. For example, in the steering assist control, the ECU 20 controls the steering motor 34 so as to inhibit the steering wheel from being operated to (in) a direction where the steering angle θ exceeds (becomes greater than) the target steering angle θtgt. In other words, the ECU 20 interferes a steering operation to a direction where the steering angle θ exceeds the target steering angle θtgt.

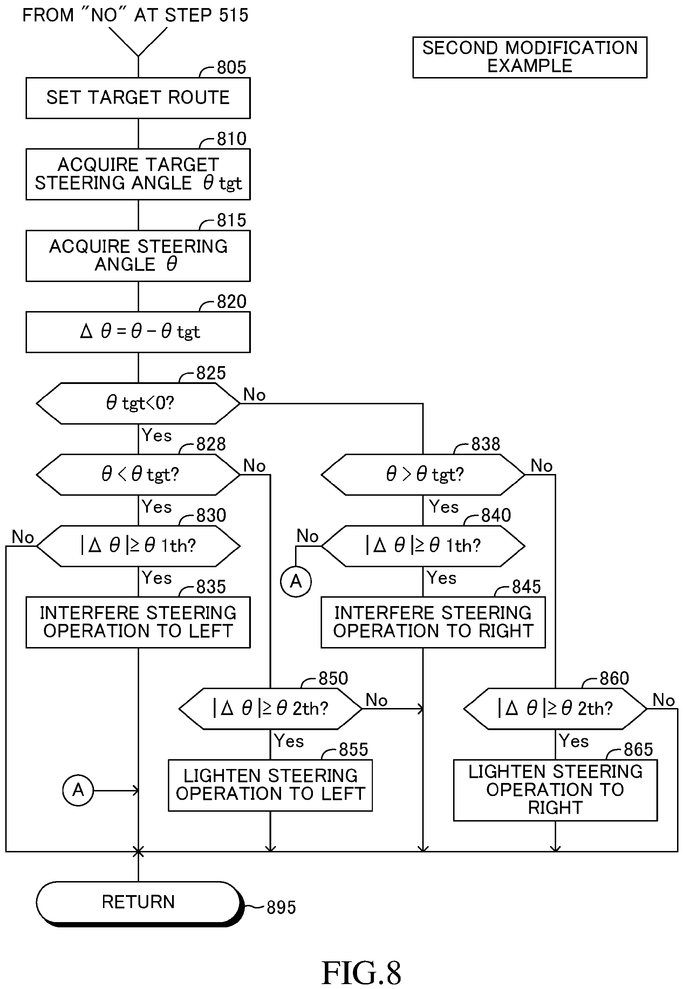

In the present modification example, when the CPU of the ECU 20 makes a "No" determination at step 515 shown in FIG. 5 (in other words, when the learning flag Xlrn is "1"), the CPU executes steps 805 to 825 shown in FIG. 8.

Step 805: The CPU sets the target route. Step 805 is the same as step 520 shown in FIG. 5, so a detailed explanation of step 805 is omitted.

Step 810: The CPU acquires the target steering angle θtgt. Step 810 is the same as step 525 shown in FIG. 5, so a detailed explanation of step 810 is omitted.

Step 815: The CPU acquires the steering angle θ based on the detected value of the steering angle sensor 26.

Step 820: The CPU acquires a difference Δθ by subtracting the target steering angle θtgt from the steering angle θ.

Step 825: The CPU determines whether or not the target steering angle θtgt is the negative value.

When the target steering angle θtgt is the negative value, the CPU makes a "Yes" determination at step 825 and the process proceeds to step 828. At step 828, the CPU determines whether or not the steering angle θ is smaller than the target steering angle θtgt.

When the steering angle θ is smaller than the target steering angle θtgt, the CPU makes a "Yes" determination at step 828 and the process proceeds to step 830. At step 830, the CPU determines whether or not a magnitude of the difference Δθ (|Δθ|) is greater than or equal to a "predetermined threshold θ1th".

When the magnitude of the difference Δθ (|Δθ|) is equal to or greater than the threshold θ1th, the CPU determines that the above excessive condition is satisfied. In this case, the CPU makes a "Yes" determination at step 830, and the process proceeds to step 835. At step 835, the CPU controls the steering motor 34 such that it becomes difficult for the driver to steer the steering wheel to a direction (to the left) that exceeds the target steering angle θtgt (in other words, such that the steering operation to the left becomes heavier.). As a result, the CPU interferes (weighs) the steering operation to the left. In more detail, the steering motor 34 provides a torque to rotate the steering wheel to the right. Thereafter, the process proceeds to step 895, and the CPU terminates the present routine tentatively.

On the other hand, when the magnitude of the difference Δθ (|Δθ|) is smaller than the threshold θ1th, the CPU determines that the above excessive condition is not satisfied. In this case, the CPU makes a "No" determination at step 830, and the process proceeds to step 895. At Step 895, the CPU terminates the present routine tentatively.

In a case where the target steering angle θtgt is equal to or greater than "0" when the process proceeds to step 825, the CPU makes a "No" determination at step 825 and the process proceeds to step 838. At step 838, the CPU determines whether or not the steering angle θ is greater than the target steering angle θtgt.

When the steering angle θ is greater than the target steering angle θtgt, the CPU makes a "Yes" determination at step 838 and the process proceeds to step 840. At step 840, the CPU determines whether or not the magnitude of the difference Δθ (|Δθ|) is equal to or greater than the threshold θ1th.

When the magnitude of the difference Δθ (|Δθ|) is equal to or greater than the threshold θ1th, the CPU determines that the above excessive condition is satisfied. In this case, the CPU makes a "Yes" determination at step 840, and the process proceeds to step 845. At step 845, the CPU controls the steering motor 34 such that the steering operation to the right becomes heavier. As a result, the CPU interferes (weighs) the steering operation to the right. Thereafter, the process proceeds to step 895, and the CPU terminates the present routine tentatively.

On the other hand, when the magnitude of the difference Δθ (|Δθ|) is smaller than the threshold θ1th, the CPU determines that the above excessive condition is not satisfied. In this case, the CPU makes a "No" determination at step 840, and the process proceeds to step 895. At step 895, the CPU terminates the present routine tentatively.

In a case where the steering angle θ is equal to or greater than the target steering angle θtgt when the process proceeds to step 828, the CPU makes a "No" determination at step 828 and the process proceeds to step 850. At step 850, the CPU determines whether or not the magnitude of the difference Δθ (|Δθ|) is equal to or greater than a predetermined threshold θ2th.

When the magnitude of the difference (|Δθ|) is greater than or equal to the threshold θ2th, the CPU determines an insufficient condition is satisfied. The insufficient condition is satisfied when that the steering wheel is being operated without exceeding the target steering angle θtgt and that the magnitude of the difference (Δθ) between the steering angle θ and the target steering angle θtgt is equal to or greater than the threshold. In this case, the CPU makes a "Yes" determination at step 850 and the process proceeds to step 855. At step 855, the CPU controls the steering motor 34 such that it becomes easy for the driver to steer the steering wheel in a direction (to the left) that exceeds the target steering angle θtgt (in other words, such that the steering operation to the left becomes lighter.). In more detail, the steering motor 34 provides a torque to rotate the steering wheel to the left. Thereafter, the process proceeds to step 895, and the CPU terminates the present routine tentatively.

When the magnitude of the difference (|Δθ|) is smaller than the threshold θ2th, the CPU determines that the insufficient condition is not satisfied. In this case, the CPU makes a "No" determination at step 850, and the process proceeds to step 895. At step 895, the CPU terminates the present routine tentatively.

In a case where the steering angle θ is equal to or smaller than the target steering angle θtgt when the process proceeds to step 838 and, the CPU makes a "No" determination at step 838 and the process proceeds to step 860. At step 860, the CPU determines whether or not the magnitude of the difference Δθ (|Δθ|) is equal to or greater than the threshold θ2th.

When the magnitude of the difference Δθ (|Δθ|) is equal to or greater than the threshold θ2th, the CPU determines that the insufficient condition is satisfied. In this case, the CPU makes a "Yes" determination at step 860, and the process proceeds to step 855. At Step 855, the CPU controls the steering motor 34 such that the steering operation to the right becomes lighter. Thereafter, the process proceeds to step 895, and the CPU terminates the present routine tentatively.

When the magnitude of the difference Δθ (|Δθ|) is smaller than the threshold θ2th, the CPU determines that insufficient condition is not satisfied. In this case, the CPU makes a "No" determination at step 860, and the process proceeds to step 895. At step 895, the CPU terminates the present routine tentatively.

According to the present modification example, when the excessive condition is satisfied, the steering operation to the direction that exceeds the target steering angle θtgt becomes heavier. Therefore, the driver can quickly know that the excessive condition is satisfied (i.e. that the driver turns the steering wheel too much). When the insufficient condition is satisfied, the steering operation to the direction that brings the steering angle θ closer to the target steering angle θtgt become lighter. Therefore, the driver can quickly know that the insufficient condition is satisfied (i.e. that the driver turns the steering wheel too little).

The parking assist control according to the present modification example notifies the driver that either the excessive condition or the insufficient condition is satisfied by controlling the steering motor 34 to change weight of the steering operation of the steering wheel, either the excessive condition or the insufficient condition is satisfied. However, the parking assist is not limited to this. For example, when either the excessive condition or the insufficient condition is satisfied, the parking assist control may display an animation on the assist screen 200 showing the steering operation of the steering wheel to match the target steering angle θtgt.

### (Third modification example)

The learning mode according to the present modification example includes a full-auto learning mode, an assist learning mode, and a manual learning mode. The ECU 20 allows the driver to select which learning mode to use for the parking assist control after the learning mode button is operated on the initial screen.

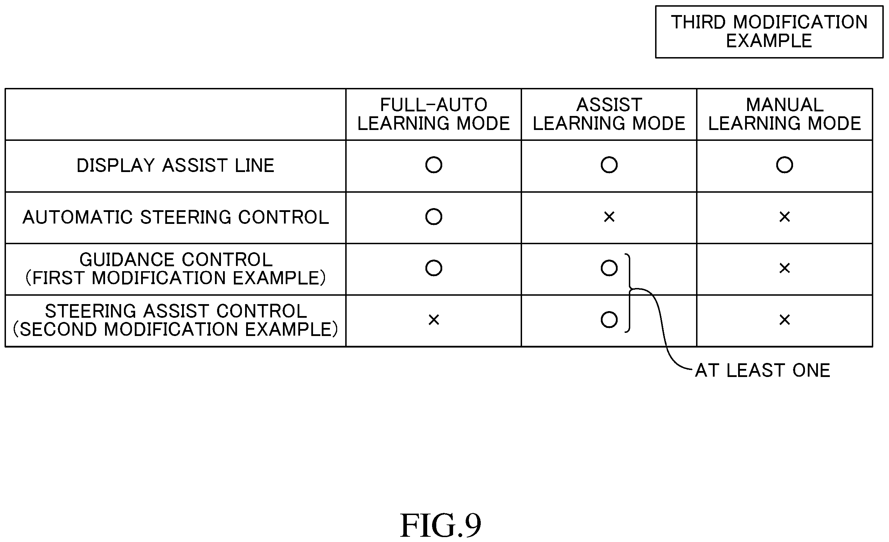

As shown in FIG. 9, in the full-auto learning mode, the ECU 20 displays the assist line 230, and executes an automatic steering control and the guidance control. The driver selects the full-auto learning mode when the driver wants to learn the assist lines 230, the operation message and confirmation messages without performing any manual operation to park the vehicle VA. In the full-auto learning mode, the automatic steering control is executed, so the driver does not need to operate the steering wheel. Therefore, the steering assist control is not executed in the full-auto learning mode.

In the assist learning mode, the ECU 20 displays the assist line 230 and does not execute the automatic steering control. In the assist learning mode, the ECU 20 executes at least one of the guidance control and the steering assist control. The driver can select whether to execute either the guidance control or the steering assist control, or to execute both the guidance control and the steering assist control. The driver selects the assist learning mode when the driver performs the manual operation to park the vehicle VA and the driver needs to parking assist.

In the manual learning mode, the ECU 20 displays the assist line 230 and does not execute the automatic steering control, the guidance control, and the steering assist control. The driver selects the manual learning mode when the driver does not need any parking assist other than the assist line 230.

The assist for the driver in the full-auto learning mode is the strongest. The assist for the driver in the assist learning mode is the next strongest. The assist for the driver in the manual learning mode is the weakest.

In the parking assist control, a mode in which the automatic steering control is executed is called as "a first mode", and a mode in which the automatic steering control is not executed is called as a "second mode". In the above embodiment, the learning mode is explained as the "second mode", but the full-auto learning mode of the present modification example is not included in the second mode.

According to the present modification example, the driver can select the learning mode that suits the driver's parking skill.

### (Fourth modification example)

In the present modification example, the manual learning mode of the third modification example can only be selected when a predetermined release condition is satisfied When the parking assistant control is being executed in the assist learning mode, the ECU 20 acquires a route deviation amount and a completion deviation amount. The route deviation amount represents an amount of deviation from the target route. The completion deviation amount represents an amount of deviation in a direction orientation of the vehicle VA with respect to the target space when parking is complete, and an amount of deviation in the position of the vehicle VA with respect to the target space when parking is complete. In a case where a pass condition is satisfied when parking is complete in the assist learning mode, the ECU 20 registers that the pass condition is satisfied. The pass condition is satisfied when the route deviation amount is equal to or smaller than a threshold amount Tth and the completion deviation amount is equal to or smaller than a threshold amount Dth.

When the number of times the pass condition is satisfies in the assist learning mode is equal to or greater than a threshold, the ECU20 determines that the release condition is satisfied and enables the manual learning mode to be selected. The manual learning mode can only be executed when the parking skill have improved in the assist learning mode. This can also be used as an incentive for the driver to use the learning mode.

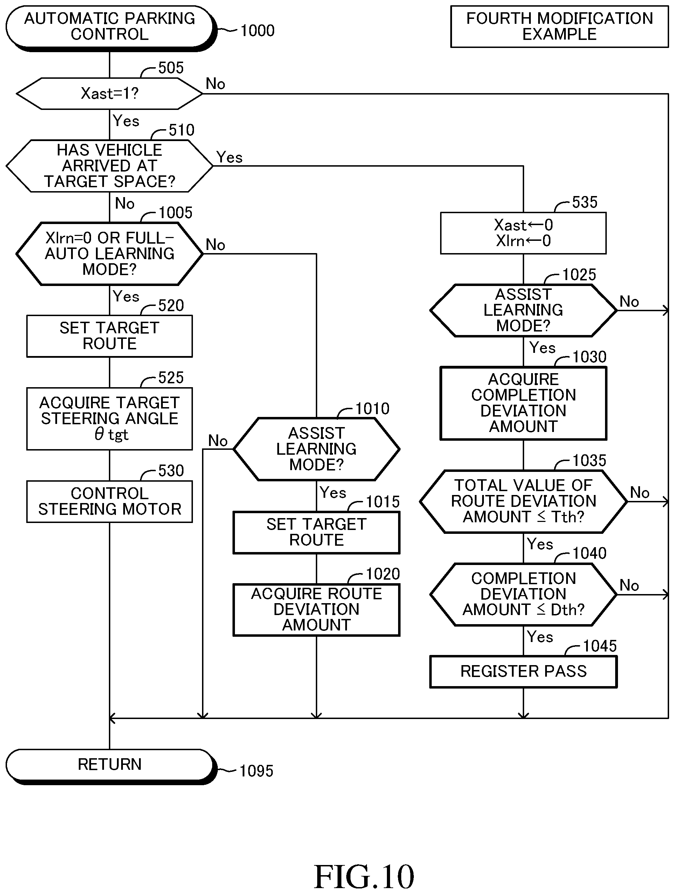

In the present modification example, the CPU of the ECU20 executes a routine shown in FIG. 10 instead of the routine shown in FIG. 5. In FIG. 10, the same processes as in FIG. 5 are given the same symbols, and their explanations are omitted.

When an appropriate time comes, the CPU starts a process from step 1000 in FIG. 10. If the assist flag Xast is "1" ("Yes" at step 505 in FIG. 10) and the vehicle VA has not yet arrived at the target space ("No" at step 510 in FIG. 10), the process proceeds to step 1005.

At step 1005, the CPU determines whether or not the learning flag Xlrn is "0" or the full-auto learning mode has been selected.

When the learning flag Xlrn is "0" or the full auto learning mode has been selected, the CPU makes a "Yes" determination at step 1005 and the process proceeds to step 520. On the other hand, when the learning flag Xlrn is "1" and the full-auto learning mode has not been selected, the CPU makes a "No" determination at step 1005 and the process proceeds to step 1010.

At step 1010, the CPU determines whether or not the assist learning mode has been selected. When the assist learning mode has been selected, the CPU makes a "Yes" determination at step 1010 and executes steps 1015 and 1020.

Step 1015: The CPU sets the target route.

Step 1020: The CPU acquires the route deviation amount.

Thereafter, the process proceeds to step 1095, and the CPU terminates the present routine tentatively.

When the assist learning mode has not been selected (i.e. when the manual learning mode has been selected), the CPU makes a "No" determination at step 1010 and the process proceeds to step 1095. At step 1095, the CPU terminates the present routine tentatively.

In a case where the vehicle VA arrives at the target space when the process proceeds to step 510 shown in FIG. 10, the CPU makes a "Yes" determination at step 510 and executes step 535. Thereafter, the process proceeds to step 1025.

At step 1025, the CPU determines whether or not the assist learning mode has been selected. When the assist learning mode has been selected, the CPU makes a "Yes" determination at step 1025 and executes steps 1030 and 1035.

Step 1030: The CPU acquires the completion deviation amount.

Step 1035: The CPU determines whether or not a total value of the route deviation amount in the present assist learning mode is equal to or smaller than the threshold amount Tth.

When the total value is equal to or smaller than the threshold amount Tth, the CPU makes a "Yes" determination at step 1035 and the process proceeds to step 1040. At Step 1040, the CPU determines whether or not the completion deviation amount is equal to or smaller than the threshold amount Dth.

When the completion deviation amount is equal to or smaller than the threshold Dth, the CPU determines that the pass condition is satisfied. In this case, the CPU makes a "Yes" determination at Step 1040, and the process proceeds to step 1045. At step 1045, the CPU registers that the pass condition is satisfied. Thereafter, the process proceeds to step 1095, and the CPU terminates the present routine tentatively.

When the assist learning mode has not been selected ("No" at step 1025), when the total value is greater than the threshold amount Tth ("No" at step 1035), and when the completion deviation amount is greater than the threshold amount Dth ("No" at step 1040), the process proceeds to step 1095, and the CPU terminates the present routine tentatively.

The assist learning mode may include a first assist learning mode and a second assist learning mode. The assistance for the driver in the second assist learning mode is weaker than the assistance for the driver in the first assist learning mode. As an example, in the first assist learning mode, both the guidance control and the steering assist control are executed, and in the second assist learning mode, either the guidance control or the steering assist control is executed. When the number of times the pass condition is satisfies in the first assist learning mode is equal to or greater than the threshold, the release condition of the second assist learning mode is satisfied. In this case, the second assist learning mode can be selected.

### (Fifth modification example)

In the present modification example, when a parking assist mode is being executed in the learning mode, the ECU 20 acquires the route deviation amount and the completion deviation amount. When parking is complete, the ECU 20 evaluates the manual operation in the learning mode based on the route deviation amount and the completion deviation amount, and displays the evaluation result on the display 42. Hereby, the driver can know an objective evaluation result of the manual operation for parking.

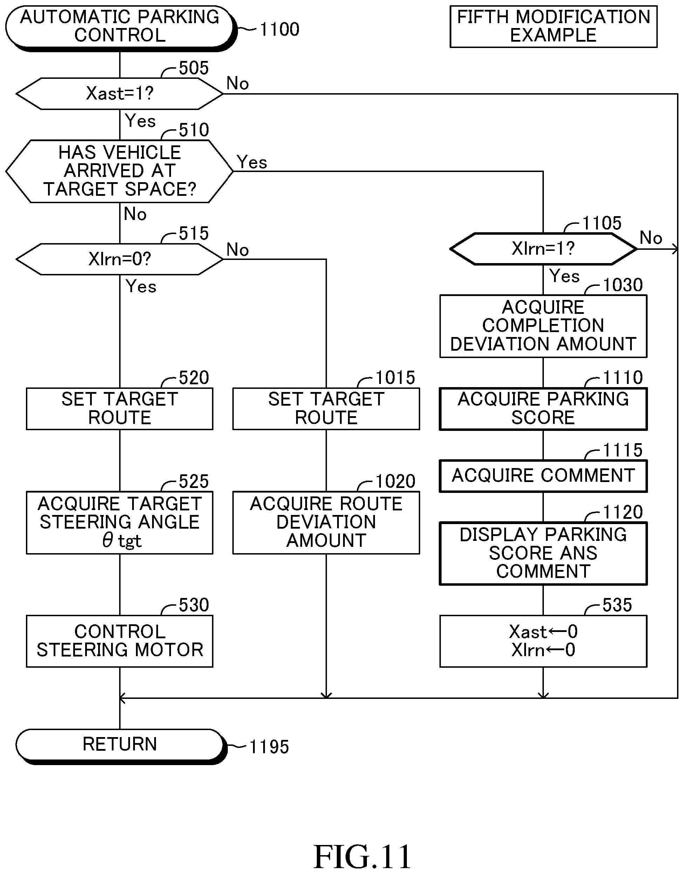

In the present modification example, the CPU of the ECU 20 executes a routine shown in FIG. 11 instead of the routine shown in FIG. 5. In FIG. 11, the same processes as in FIGs. 5 and 10 are given the same symbols, and their explanations are omitted.

When an appropriate time comes, the CPU starts a process from step 1100 in FIG. 11.

When the assist flag Xast is "1" ("Yes" at step 505 "shown in Fig. 11), the vehicle VA has not yet arrived at the target space ("No" at step 510 shown in Fig. 11), and the learning flag Xlrn is "0" ("Yes" at step 515 shown in Fig. 11), the CPU executes the automatic parking control (i.e., the CPU executes steps 520 to 530 shown in Fig. 11). Thereafter, the process proceeds to step 1195, and the CPU terminates the present routine tentatively.

In a case where the learning flag Xlrn is "1" ("No" at step 515 as shown in FIG. 11) when the process proceeds to step 515 as shown in FIG. 11, the CPU executes steps 1015 and 1020 as shown in FIG. 11. Thereafter, the process proceeds to step 1195, and the CPU terminates the present routine tentatively.

In a case where the vehicle VA has arrived at the target space when the process proceeds to step 510 ("Yes" at step 510 shown in FIG. 11), the process proceeds to step 1105. At step 1105, the CPU determines whether or not the learning flag Xlrn is "1".

When the learning flag Xlrn is "0", the CPU makes a "No" determination at step 1105. Thereafter, the process proceeds to step 1195, and the CPU terminates the present routine tentatively.

When the learning flag Xlrn is "1", the CPU makes a "Yes" determination at step 1105 and executes steps 1030, 1110 to 1120, and 535 as shown in FIG.11.

Step 1110: The CPU acquires a parking score based on the total value of the route deviation amount and the completion deviation amount. In detail, the parking score is acquired so that the smaller the total value of the route deviation amount, the higher the parking score, and the smaller the completion deviation amount, the higher the parking score.

Step 1115: The CPU acquires a comment based on the total value of the route deviation amount and the completion deviation amount. For example, when there is an area where the route deviation amount is greater than the threshold, the CPU acquires the confirmation message and the operation message corresponding to that area as the comment. Furthermore, the CPU may also acquire a hint/tip for reducing the route deviation amount corresponding to that area as the comment. When the completion deviation amount is greater than the threshold, the CPU acquires a hint/tip for reducing the completion deviation amount as the comment.

Step 1120: The CPU displays the parking score and the comment on display 42.

Thereafter, the process proceeds to step 1195, and the CPU terminates the present routine tentatively.

In the above embodiment, the example of the operation assist control is the parking assist control. The present embodiment can be applied to the operation assist control for assisting the driver's operation when the vehicle travels to the target space. Furthermore, the automatic parking control is one type of the automatic driving control for automatically travels the vehicle to the target space. As an example, the present embodiment can also be applied to the automatic driving control for traveling the vehicle out of the parking space.

The operation assist apparatus 10 may be applied to (or installed in/on) an engine vehicle, a hybrid electric vehicle (HEV), a plug-in hybrid electric vehicle (PHEV), a fuel cell electric vehicle (FCEV), and a battery electric vehicle (BEV).

## Claims

1. An operation assist apparatus (10) configured to execute an operation assist control for assisting an operation of a driver when a vehicle (VA) travels to a target space,
wherein, the operation assist control includes a first mode and a second mode,
wherein, whether the operation assist control is executed in the first mode or the second mode is selected,
wherein,
the operation assist apparatus (10) is configured to:
acquire a target route to the target space when the operation assist control is executed (step 330);
execute an automatic driving control for automatically controlling at least a steered angle of the vehicle (VA) such that the vehicle (VA) travels along the target route (step 525 to step 530) when the first mode is selected ("Yes" at step 515); and
control a travel state of the vehicle (VA) according to a manual operation of the driver without executing the automatic driving control ("No" at step 515) and display the target route on a display of the vehicle ("Yes" at step 435, step 445), when the second mode is selected.

2. The operation assist apparatus (10) according to claim 1,
wherein,
the operation assist apparatus is configured to be able to execute a guidance control for outputting at least one of an operation guidance relating to the manual operation that the driver should perform and a confirmation guidance relating to an area to which the driver should pay attention, when the operation assist control is executed.

3. The operation assist apparatus (10) according to claim 1 or 2,
wherein,
the operation assist apparatus (10) is configured to a steering assist control for notifying the driver that an excessive condition is satisfied (step 835, step 845) when the excessive condition is satisfied,
wherein, the excessive condition is satisfied when a steering wheel of the vehicle (VA) is operated such that a steering angle (θ) of the steering wheel is greater than a target steering angle (θtgt) for the vehicle (VA) to travel along the target route ("Yes" at step 828, "Yes" at step 838) and a magnitude of a difference between the steering angle (θ) and the target steering angle (θtgt) is equal to or greater than a predetermined threshold ("Yes" at step 830, "Yes" at step 840).

4. The operation assist apparatus (10) according to claim 3,
wherein,
the operation assist apparatus (10) is configured to inhibit the steering wheel from being operated in a direction where the steering angle (θ) exceeds the target steering angle (step 835, step 845), when the excessive condition is satisfied.

5. The operation assist apparatus (10) according to any one of claims 1 to 4,
wherein, the second mode includes a third mode and a fourth mode,
wherein,
the operation assist apparatus (10) is configured to provide weaker assist to the driver when the fourth mode is selected than when the third mode is selected.

6. The operation assist apparatus (10) according to claim 5,
wherein, the fourth mode can be selected when a predetermined release condition is satisfied,
wherein,
the operation assist apparatus (10) is configured to:
acquire a route deviation amount representing an amount of deviation from the target route and a completion deviation amount representing an amount of deviation from the target space when parking is complete in the target space (step 1020, step 1030), when the third mode is selected ("Yes" at step 1010, "Yes" at step 1025);
determine whether or not a pass condition is satisfied each time at which parking is complete in the target space in the third mode (step 1035, step 1040),
wherein, the pass condition is satisfied when the route deviation amount is equal to or smaller than a predetermined first threshold amount and the completion deviation amount is equal to smaller than a predetermined second threshold amount; and
determine that the release condition is satisfied when the number of times that the pass condition is satisfied is equal to or greater than a predetermined threshold.

7. The operation assist apparatus (10) according to claim 5 or 6,
wherein,
the operation assist apparatus (10) is configured to:
be able to execute a guidance control and a steering assist control for when the second mode is selected,
wherein, the guidance control is a control for outputting at least one of an operation guidance relating to the manual operation that the driver should perform and a confirmation guidance relating to an area to which the driver should pay attention,
wherein, the steering assist control for notifying the driver that an excessive condition is satisfied when the excessive condition is satisfied (step 835, step 845),
wherein, the excessive condition is satisfied when a steering wheel of the vehicle (10) is operated such that a steering angle of the steering wheel is greater than a target steering angle (θtgt) for the vehicle (10) to travel along the target route and a magnitude of a difference between the steering angle and the target steering angle (θtgt) is equal to or greater than a predetermined threshold;
execute at least one of the guidance control and the steering assist control when the third mode is selected; and
execute neither the guidance control nor the steering assist control when the fourth mode is selected.

8. The operation assist apparatus (10) according to any one of claims 1 to 7,
wherein,
the operation assist apparatus (10) is configured to:
evaluate the manual operation until the vehicle arrives at the target space (step 1110, step 1115) when parking is complete in the target space in the second mode; and
output a result of evaluating (step 1120).
